# EUROPEAN PATENT SPECIFICATION

(11) **EP 0 743 818 B1**
(45) Date of publication and mention of the grant of the patent: **20.03.2002**
(21) Application number: 95939425.5
(22) Date of filing: 08.12.1995
(51) Int. Cl.: A01J 5/017, A01J 5/08

(54) **AN IMPLEMENT FOR MILKING ANIMALS**
VORRICHTUNG ZUM MELKEN VON TIEREN
SYSTEME DE TRAITE DU BETAIL

(30) Priority: 09.12.1994 NL 9402078; 08.02.1995 NL 9500232
(43) Date of publication of application: 27.11.1996
(60) Divisional application: 01202507.8
(73) Proprietor: MAASLAND N.V., 3155 PD Maasland (NL)
(72) Inventor: VAN DEN BERG, Karel, NL-2971 BR Bleskengraaf (NL)
(74) Representative: Corten, Maurice Jean F.M.
(86) International application number: PCT/NL95/00417
(87) International publication number: WO 96/17509

(56) References cited:
- WO-A-93/05647
- DE-U- 7 606 820
- US-A- 3 476 085

## Description

The present invention relates to an implement for milking animals, such as cows, comprising a milking machine which is provided with teat cups, milk lines connected thereto, said implement being provided with further means for the transporting or collecting of milk yielded.

Such an implement is known from the PCT patent application WO-A-9305647. The herein described implement for milking animals is provided with an air intake aperture. This aperture however has the disadvantage that particles from outside the implement can pass the aperture and contaminate the milk or blockade the aperture.

The invention aims in preventing this drawback. Therefore the implement is characterized in that there is provided at least one air suction line running with one end into the teat space of a teat cup or into a milk line or into a milking cluster.

In a particular embodiment according to the invention, there can also be incorporated a sensor in this air suction line for the purpose of ascertaining the pressure in the teat space. This sensor can be incorporated in the milk lines themselves; for example, from the PCT patent application WO-A-9305647 a vacuum-sensitive sensor is known, which is incorporated in the milk lines connected to the teat cups. In practice, the vacuum sensors are mostly situated at a relatively great distance from the teat cups. When a teat cup is connected to a teat of an animal to be milked, there will prevail in the teat cup and in the milk line connected thereto an underpressure amounting to e.g. 30 kPa. For example, when this teat cup is kicked off by the animal, there will be maintained an underpressure on the milk line and there will be sucked air through the teat cup. As a result, the pressure at the location of the vacuum sensor will rise; in a specific embodiment there has been ascertained, in practice, an underpressure amounting to 25 kPa. When, however, the sensor had been incorporated in the air suction line, after the teat cup had been removed from the teat again, the pressure measured by the sensor almost corresponded to that of the open air. In other words, a sensor incorporated in an air suction line is considerably more sensitive than when such a sensor would be incorporated in a milk line. Furthermore, a sensor which is incorporated in an air suction line is less vulnerable than one that comes into contact with the milk; therefore, in the latter case, there might have to be applied a sensor of a considerably more expensive type.

According to a further aspect of the invention, the teat space consists of an upper space into which a teat can be inserted, and a thereto connected lower part into which the air suction line debouches. In a particular embodiment, a milk line debouches into the lower space, while a pulsation line connected with a pulsator debouches into the pulsation space surrounding the upper space.

Further, the air suction line may be connected to a filter, preferably an active carbon filter, or whether or not via such a filter to an air compression vessel. In the latter case, the air suction line is preferably connected to a buffer reservoir which, possibly via a pressure control valve, is in connection with the air filter or the air compression vessel. In a particular embodiment, the air suction line includes a first part which is connected to the air filter or the air compression vessel and debouches into a buffer reservoir, to which reservoir is connected a second air suction line part extending to a teat cup. The first air suction line part may then extend through the buffer reservoir and debouch therein near the debouchment of the second air suction line part. The first air suction line part will then be so narrow that the pressure in the buffer reservoir will be in the order of that of the outer air or slightly higher; as a safeguard, the buffer reservoir may be provided with an air discharge opening or overpressure valve.

In order to be able to change quickly and easily the teat lining of the teat cup described sofar, according to the invention, the teat cup may comprise two parts that are removably interconnected, the upper part surrounding the upper space and the lower part surrounding the lower space. However, such an idea is not only applicable to the above-described teat cups but can also be applied to all other possible types of teat cups. Therefore, the invention also relates to an implement for milking animals, such as cows, comprising a milking machine provided with teat cups, milk lines connected thereto, and further means for transporting and collecting milk yielded, which implement is then characterized in that a teat cup comprises two parts that are removably interconnected, the upper part surrounding an upper space into which there can be inserted a teat of an animal to be milked, and the lower part surrounding the lower space, which serves as a buffer. The two parts of a teat cup can then be designed so as to be adapted to telescope into each other over a relatively short distance, while there can be provided a locking element for fixing same relative to each other.

In particular in the case that, apart from a milk line, there are provided a pulsation line and an air suction line, according to the invention, the lines connected to a teat cup can be designed as one integral line system. Therefore, the invention also relates to an implement for milking animals, such as cows, comprising a milking machine provided with teat cups, milk lines connected thereto, and further means for the purpose of transporting and collecting milk yielded, which implement is then characterized in that the lines connected to a teat cup are designed as one integral line system.

According to a further aspect of the invention, the implement can be provided with a milking robot for automatically connecting teat cups to the teats of an animal, respectively disconnecting same therefrom. In a favourable construction, the milk line and the pulsation line can each be connected to a line attached to the arm of the milking robot. After having been connected to a teat, the teat cup can be released from the robot arm, but remains connected thereto, not only via the milk line and the pulsation line, but also via a flexible element, with the aid of which the teat cup can again be drawn against the robot arm, while furthermore using a control cylinder attached to or in the robot arm. Apart from an implement as described, the invention also relates to a teat cup as is applied in the aforementioned implement.

For a better understanding of the invention and to show how the same may be carried into effect, reference will now be made, by way of example, to the accompanying drawings, in which:
Figure 1 shows a cross-section of a teat cup according to the invention and the lines connected thereto;
Figure 2 shows schematically how the two parts of a teat cup can be interconnected according to the invention, and
Figure 3 shows a cross-section of a milk line, a pulsation line and an air suction line that are constructed as one integral line system, and
Figure 4 shows schematically an alternative embodiment of a teat cup with air suction line.

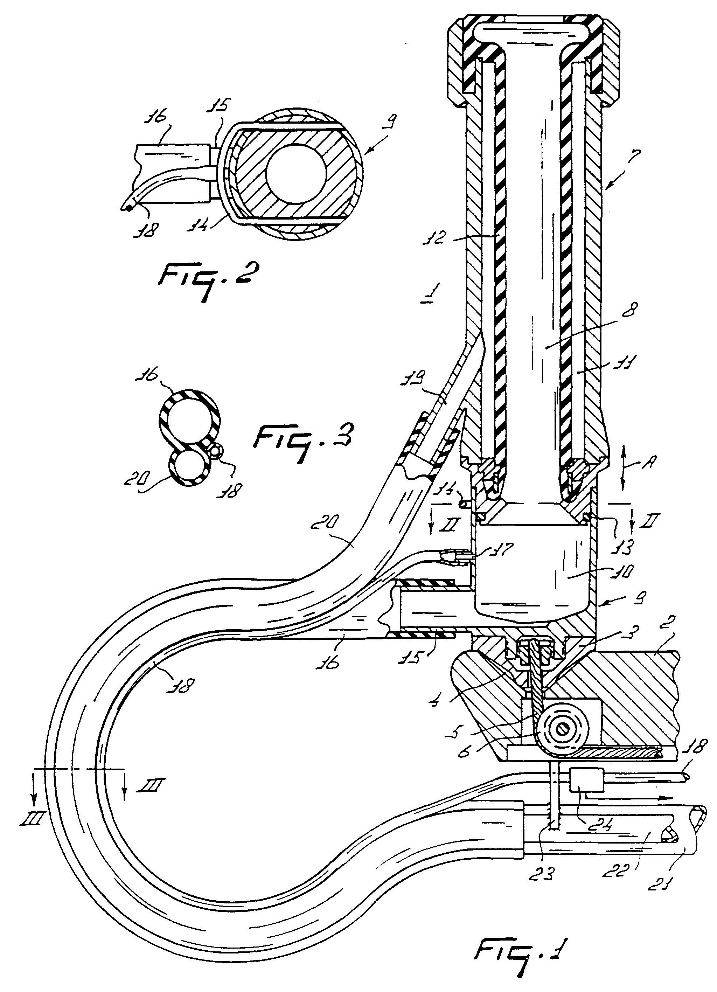

In Figure 1 a teat cup is indicated by the reference numeral 1. This teat cup constitutes part of a milking machine for automatically milking animals, such as cows, which machine, in particular for milking cows, comprises four teat cups of this type, while, furthermore, there are provided milk lines that are connected to these teat cups, and further means for transporting and collecting milk yielded. Said further means not being of interest to the present invention, they will not be described in detail. The implement, of which the milking machine constitutes part, may also comprise a milking robot for automatically connecting the teats of the animals, respectively disconnecting them. For the purpose, such a milking robot is provided with a computer-controlled robot arm. Such milking robots are also known and will not be described here in detail. Figure 1 only shows the end of a robot arm 2, as well as the manner in which the teat cup 1 is supported against the end of this robot arm 2. For that purpose, at its lower side, the teat cup 1 has a tapering part 3 that fits in a recess 4 at the upper side of the robot arm end. To the bottom side of the teat cup 1 there is attached a flexible element 5 in the form of a cable or cord, which flexible element 5 passes through the tapering part 3 of the teat cup 1 and, via a pulley 6, through an opening in the recess 4 of the robot arm 2 to a (non-shown) control cylinder attached to or in the robot arm 2. When the teat cup 1 is connected to a teat, this cylinder is released so that the robot arm 2 can be withdrawn, while the teat cup 1 is released from the robot arm 2 but, via the flexible element 5, remains connected thereto. After milking, or when for other reasons the underpressure in the teat cup 1 is not maintained, this teat cup will fall from the teat. At the same time, the control cylinder attached to or in the robot arm 2 is energized and, by means of the flexible element 5, the teat cup 1 is drawn against the robot arm 2.

The teat cup 1 comprises two parts: an upper part 7 surrounding an upper space 8, into which a teat of an animal to be milked can be inserted, and a lower part 9 surrounding the lower space 10, which serves as a buffer for the milk collected. The upper space 8 and the lower space 10 are interconnected and, together, constitute the teat space of the teat cup 1. In the upper teat cup part 7, there is created a pulsation space 11 around the upper space 8. For that purpose, at some distance from the outer wall of the upper teat cup part 7, there is provided a teat lining 12. The upper teat cup part 7 and the lower part 9 thereof are designed so as to be adapted to telescope into each other. In the embodiment shown in Figure 1, the upper teat cup part 7 is adapted to telescope into the lower part 9 over a distance A, while, by means of the seal ring 13, there is obtained an air-tight sealing.

In Figure 2 is shown how the two teat cup parts 7, 9 can be fixed relative to each other. For that purpose, there is provided a locking element 14 capable of easily being applied and removed, which element can be inserted through the outer wall of the lower teat cup part 9 and through apertures at the bottom of the upper part 7 thereof.

At the bottom of the lower teat cup part 9, there is arranged a connecting piece 15 for a milk line 16 debouching into the lower space 10. Thereabove and also debouching into the lower space, there is disposed a connecting piece 17 for an air suction line 18. On the upper teat cup part 7 there is provided a connecting piece 19 for a pulsation line 20, via which there can be established in the pulsation space 11 a fluctuating underpressure to stimulate the milking process. The milk line 16 and the pulsation line 20 are connected to a rigid milk line 21, respectively pulsation line 22. Via a support 23, these two lines are attached to the bottom side of the robot arm 2. In the air suction line 18, there is incorporated a sensor 24 for the purpose of ascertaining the pressure in the teat space. The air suction line end non-connected to the connecting piece 17 is in contact with the open air. The air suction line can debouch into a more or less closed-off recess, which is hardly accessible to dust and dirt from the milking parlour, so that the air suction line 18 is prevented from being contaminated. The sensor 24, which can both be attached to the support 23 and be connected directly to the robot arm 2, is in communication with the computer of the implement. When the teat cup 1 is connected to a teat of an animal to be milked, there prevails an underpressure in the teat space. Depending on the place where the sensor 24 is incorporated in the air suction line 18, this sensor records a certain value for the underpressure; this value will anyhow be a measure for the underpressure in the teat space. The underpressure value ascertained by the sensor 24 is passed on to the computer of the milking system. Upon connecting the teat cups to the teats, the underpressure value is an important factor, because, only when a sufficient underpressure is obtained in the teat space, the teat cup can be assumed to be connected to the teat and the robot arm 2 can be displaced, while the teat cup then can be released from the robot arm. As long as the teat cup is not connected to a teat, or when the teat cup is kicked off by the animal, there can prevail an underpressure in the milk line, as a result of which there is permanently sucked in air by the teat cup. However, the pressure in the teat cup will almost equal that of the open air. Therefore, this pressure will be recorded by the sensor 24.

The milk line 16, the air suction line 18 and the pulsation line 20, together, can be designed as one integral line system. A possible cross-section of such a line system is shown in Figure 3.

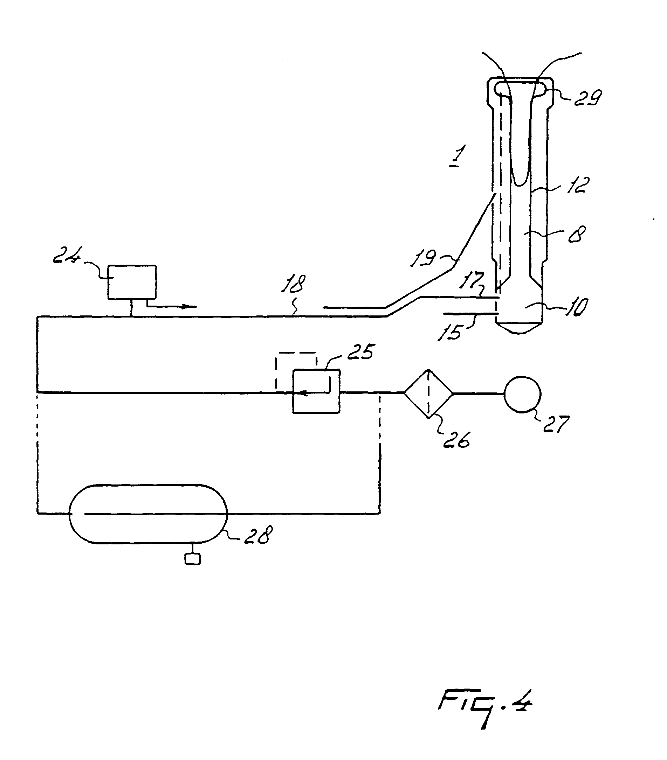

In the embodiment of Figure 1, the air suction line 18 is in direct connection with the outer air, so that dust and dirt from the stable room may be sucked into the teat cup and there is a risk of clogging of the suction line. In Figure 4 there is shown schematically a teat cup 1 with the air suction line 18 and the sensor 24, the air suction line 18 being connected, via a pressure control valve 25 and an air filter 26, preferably designed as an active carbon filter, to an air compression vessel 27. Although the air suction line 18 could be connected directly to the air compression vessel 27 or via the pressure control valve 25, by means of which the high pressure of the air flowing from the air compression vessel 27 can be reduced to that of the outer atmosphere or slightly higher, it is preferred to make use of the air filter, because even the air in the air compression vessel is not completely pure. The air flowing from the air compression vessel 27 is then cleaned in the filter 26, after which subsequently the pressure is adapted by means of the pressure control valve 25. In the same Figure 4 there is indicated an alternative for the pressure control valve 25. In this alternative embodiment, there is provided a buffer reservoir 28 which is incorporated in the air suction line 18. The air suction line part connected to the air filter 26 then extends through the buffer reservoir 28 and debouches therein near the debouchment of the air suction line part connected to the teat cup. The air suction line part connected to the filter 26 has such a narrow cross-section that in the buffer reservoir 28 there will prevail a suitable pressure for sucking in air to the teat cup. In case the pressure might increase too much, the overpressure can escape from the buffer reservoir via an air discharge opening or overpressure valve in the wall thereof.

In the embodiments of Figures 1 and 4, the air suction line 18 debouches into the lower teat space 10 of the teat cup. In Figure 4 is shown by means of interrupted lines how the air suction line 18 can be passed through the teat cup wall or through the pulsation space upwardly and debouch into an annular space 29 located relatively closely below the upper edge of the teat cup 1. When the air suction line 18 debouches into the lower part of the teat space, then, during milking, there will prevail in the lower part of the teat space an underpressure in the order of 40 kPa and in the annular space 29 relatively closely below the upper edge of the teat cup an underpressure of 10 kPa. In practice, therefore, there will almost always occur a leak air flow from outside along the teat to the milk line. At the same time, contaminations and stable air containing dust particles are sucked along hereby along the teats. In order to reduce this, the air suction line may debouch into the annular space 29. Hereby it is achieved that the underpressure in this space is reduced to approximately 5 kPa, thereby also reducing considerably the leak air flow from outside the teat cup and hence the amount of dust and contaminations sucked into the teat cup.

The invention is not restricted to the embodiment described and shown here, but it includes all sorts of modifications, of course, falling within the scope of the following claims. The air suction line 18 may, for example, debouch into the milk line 16, preferably close to the connection of the milk line to the teat cup, instead of debouching into the lower space 10 of the teat cup.

## Claims

1. An implement for milking animals, such as cows, comprising a milking machine which is provided with teat cups (1), milk lines (16, 21) connected thereto, said implement being provided with further means for the transporting or collecting of milk yielded, **characterized in that** there is provided at least one air suction line (18) running with one end into the teat space of a teat cup (1) or into a milk line (16, 21) or into a milking cluster

2. An implement as claimed in claim 1, **characterized in that** there is incorporated a sensor (24) in the air suction line (18) for the purpose of ascertaining the pressure in the teat space.

3. An implement as claimed in claim 1 or 2, **characterized in that** the teat space consists of an upper space (8) into which a teat can be inserted, and a thereto connected lower space (10) into which the air suction line (18) debouches.

4. An implement as claimed in claim 3, **characterized in that** the milk line (16) debouches into the lower space (10), while a pulsation line (20, 22) connected with a pulsator debouches into a pulsation space (11) surrounding the upper space.

5. An implement as claimed in any one of the preceding claims, **characterized in that** the air suction line (18) debouches through the wall of the teat cup (1) into the space inside the teat cup.

6. An implement as claimed in claim 5, **characterized in that** the upper edge of the teat cup (1) is made of a flexible material, while relatively closely therebelow there is provided an annular space (29), the diameter of which is larger than the teat space part (8) therebelow and bordering the pulsation space (11).

7. An implement as claimed in any one of claims 1 to 6, **characterized in that** the air suction line (18) is connected to an air filter (26).

8. An implement as claimed in any one of claims 1 to 6, **characterized in that** the air suction line (18) is connected, possibly via the air filter (26), to an air compression vessel (27).

9. An implement as claimed in claim 7 or 8, **characterized in that** the air suction line (18) is connected to a buffer reservoir (28) which, possibly via a pressure control valve (25), is in contact with the air filter (26) or the air compression vessel (27).

10. An implement as claimed in claim 7 or 8, **characterized in that** the air suction line (18) includes a first part which is connected to the air filter (26) or the air compression vessel (27) and debouches into the buffer reservoir (28), to which reservoir is connected a second air suction line part extending to the teat cup (1).

11. An implement as claimed in claim 10, **characterized in that** the first air suction line part extends through the buffer reservoir (28) and debouches therein near the debouchment of the second air suction line part.

12. An implement as claimed in claim 10 or 11, **characterized in that** the buffer reservoir (28) is provided with an air discharge opening or overpressure valve.

13. An implement as claimed in any one of the preceding claims, **characterized in that** the teat cup (1) comprises two parts (7, 9) that are removably interconnected, the upper part (7) surrounding the upper space and the lower part (9) surrounding the lower space.

14. An implement as claimed in claim 13, **characterized in that** both parts (7, 9) of the teat cup (1) are designed so as to be adapted to telescope into each other over a relatively short distance, while there is provided a locking element (14) for fixing same relative to each other.

15. An implement as claimed in claim 4, **characterized in that** the lines (16, 18, 20) connected to the teat cup (1) are designed as one integral line system.

16. An implement as claimed in claim 15, **characterized in that** the line system comprises the milk line (16), the pulsation line (20) and the air suction line (18).

17. An implement as claimed in claim 4, **characterized in that** there is provided a milking robot for automatically connecting teat cups (1) to the teats of an animal, respectively disconnecting same therefrom, while the milk line (16) and the pulsation line (20) each are connected to a line (21, 22) attached to the arm (2) of the milking robot.

18. An implement as claimed in claim 17, **characterized in that**, after having been connected to a teat, the teat cup (1) can be released from the robot arm (2), but remains connected thereto via a flexible element (5), with the aid of which, and also of that of a control cylinder attached to or in the robot arm, the teat cup can again be drawn against the robot arm (2).

## Patentansprüche

1. Anlage zum Melken von Tieren, wie z. B. Kühen, mit einer Melkmaschine, die mit Zitzenbechern (1) versehen ist, an die Milchleitungen (16, 21) angeschlossen sind, wobei die Anlage mit weiteren Vorrichtungen zum Transportieren oder Sammeln von gewonnener Milch versehen ist,
**dadurch gekennzeichnet, daß** mindestens eine Luftansaugleitung (18) vorhanden ist, die an einem Ende in den Zitzenraum eines Zitzenbechers (1) oder in eine Milchleitung (16, 21) oder in ein Melkgeschirr mündet.

2. Anlage nach Anspruch 1,
**dadurch gekennzeichnet, daß** in der Luftansaugleitung (18) ein Sensor (24) zum Messen des Druckes im Zitzenraum angeordnet ist.

3. Anlage nach Anspruch 1 oder 2,
**dadurch gekennzeichnet, daß** der Zitzenraum aus einem oberen Raum (8) besteht, in den eine Zitze eingesetzt werden kann, und aus einem sich daran anschließenden unteren Raum (10), in den die Luftansaugleitung (18) mündet.

4. Anlage nach Anspruch 3,
**dadurch gekennzeichnet, daß** die Milchleitung (16) in den unteren Raum (10) mündet, während eine an einen Pulsator angeschlossene Pulsierleitung (20, 22) in einen Pulsierraum (11) mündet, der den oberen Raum umgibt.

5. Anlage nach einem der vorhergehenden Ansprüche,
**dadurch gekennzeichnet, daß** die Luftansaugleitung (18) durch die Wand des Zitzenbechers (1) hindurch in den Raum innerhalb des Zitzenbechers mündet.

6. Anlage nach Anspruch 5,
**dadurch gekennzeichnet, daß** der obere Rand des Zitzenbechers (1) aus einem elastischen Material hergestellt ist, wobei relativ dicht darunter ein Ringraum (29) angeordnet ist, dessen Durchmesser größer ist als der des darunterliegenden und an den Pulsierraum (11) angrenzenden Zitzenraumteiles (8).

7. Anlage nach einem der Ansprüche 1 bis 6,
**dadurch gekennzeichnet, daß** die Luftansaugleitung (18) mit einem Luftfilter (26) verbunden ist.

8. Anlage nach einem der Ansprüche 1 bis 6,
**dadurch gekennzeichnet, daß** die Luftansaugleitung (18) eventuell über den Luftfilter (26) mit einem Luftkompressionsbehälter (27) verbunden ist.

9. Anlage nach Anspruch 7 oder 8,
**dadurch gekennzeichnet, daß** die Luftansaugleitung (18) mit einem Auffangbehälter (28) verbunden ist, der eventuell über ein Drucksteuerungsventil (25) mit dem Luftfilter (26) oder dem Luftkompressionsbehälter (27) in Kontakt steht.

10. Anlage nach Anspruch 7 oder 8,
**dadurch gekennzeichnet, daß** die Luftansaugleitung (18) einen ersten Abschnitt aufweist, der mit dem Luftfilter (26) oder dem Luftkompressionsbehälter (27) verbunden ist und in den Auffangbehälter (28) mündet, an den ein zweiter, sich zum Zitzenbecher (1) erstreckender Abschnitt der Luftansaugleitung angeschlossen ist.

11. Anlage nach Anspruch 10,
**dadurch gekennzeichnet, daß** sich der erste Abschnitt der Luftansaugleitung durch den Auffangbehälter (28) hindurch erstreckt und in diesen nahe der Mündung des zweiten Abschnittes der Luftansaugleitung mündet.

12. Anlage nach Anspruch 10 oder 11,
**dadurch gekennzeichnet, daß** der Auffangbehälter (28) mit einer Luftauslaßöffnung oder einem Überdruckventil versehen ist.

13. Anlage nach einem der vorhergehenden Ansprüche,
**dadurch gekennzeichnet, daß** der Zitzenbecher (1) zwei Teile (7, 9) umfaßt, die lösbar miteinander verbunden sind, wobei der obere Teil (7) den oberen Raum und der untere Teil (9) den unteren Raum umschließt.

14. Anlage nach Anspruch 13,
**dadurch gekennzeichnet, daß** beide Teile (7, 9) des Zitzenbechers (1) derart ausgebildet sind, daß sie über eine relative kurze Distanz ineinander einschiebbar sind, wobei ein Verriegelungselement (14) vorgesehen ist, um die Teile relativ zueinander festzulegen.

15. Anlage nach Anspruch 4,
**dadurch gekennzeichnet, daß** die an den Zitzenbecher (1) angeschlossenen Leitungen (16, 18, 20) als ein zusammenhängendes Leitungssystem ausgebildet sind.

16. Anlage nach Anspruch 15,
**dadurch gekennzeichnet, daß** das Leitungssystem die Milchleitung (16), die Pulsierleitung (20) und die Luftansaugleitung (18) umfaßt.

17. Anlage nach Anspruch 4,
**dadurch gekennzeichnet, daß** ein Melkroboter vorgesehen ist, um Zitzenbecher (1) automatisch an die Zitzen eines Tieres anzuschließen bzw. von diesen abzunehmen, wobei die Milchleitung (16) und die Pulsierleitung (20) jeweils mit einer Leitung (21, 22) verbunden sind, die an dem Arm (2) des Melkroboters angebracht ist.

18. Anlage nach Anspruch 17,
**dadurch gekennzeichnet, daß** der Zitzenbecher (1) nach dem Anschluß an eine Zitze von dem Roboterarm (2) freigegeben werden kann, aber mit diesem über ein flexibles Element (5) verbunden bleibt, wobei der Zitzenbecher mit Hilfe des Elements und auch mit Hilfe eines an oder in dem Roboterarm angebrachten Steuerzylinders wieder an den Roboterarm (2) herangezogen werden kann.

## Revendications

1. Système de traite du bétail, notamment des vaches, qui comprend une machine de traite munie de gobelets pour trayons (1) et de conduites de lait (16, 21) raccordées à ceux-ci, ledit système étant muni de moyens complémentaires pour le transport ou la collecte du lait récolté, **caractérisé en ce qu'**au moins une conduite d'aspiration d'air (18) est prévue, dont une extrémité s'étend dans l'espace du trayon d'un gobelet pour trayon (1) ou dans une conduite de lait (16, 21) ou une citerne de traite.

2. Système selon la revendication 1, **caractérisé en ce qu'**un capteur (24) est intégré dans la conduite d'aspiration d'air (18) dans le but de contrôler la pression dans l'espace du trayon.

3. Système selon l'une des revendications 1 ou 2, **caractérisé en ce que** l'espace du trayon consiste en un espace supérieur (8) dans lequel un trayon peut être introduit et en un espace inférieur (10) relié au premier dans lequel se termine la conduite d'aspiration d'air (18).

4. Système selon la revendication 3, **caractérisé en ce que** la conduite de lait (16) se termine dans l'espace inférieur (10), tandis qu'une conduite de pulsation (20, 22) reliée à un émetteur de pulsations se termine dans un espace de pulsation (11) entourant l'espace supérieur.

5. Système selon l'une des revendications précédentes, **caractérisé en ce que** la conduite d'aspiration d'air (18) se termine à travers la paroi du gobelet pour trayon (1) dans l'espace à l'intérieur du gobelet pour trayon.

6. Système selon la revendication 5, **caractérisé en ce que** le bord supérieur du gobelet pour trayon (1) est réalisé en un matériau flexible, tandis qu'un espace annulaire (29) est prévu à un endroit relativement proche sous celui-ci, dont le diamètre est supérieur à la partie (8) du gobelet pour trayon en dessous et qui entoure l'espace de pulsation (11).

7. Système selon l'une des revendications 1 à 6, **caractérisé en ce que** la conduite d'aspiration d'air (18) est reliée à un filtre à air (26).

8. Système selon l'une des revendications 1 à 6, **caractérisé en ce que** la conduite d'aspiration d'air (18) est reliée, éventuellement par l'interposition du filtre à air (26), à un compartiment de compression d'air (27).

9. Système selon l'une des revendications 7 ou 8, **caractérisé en ce que** la conduite d'aspiration d'air (18) est reliée à un réservoir tampons (28) qui est en contact, éventuellement par l'interposition d'une soupape de contrôle de pression (25), avec le filtre à air (26) ou le compartiment de compression d'air (27).

10. Système selon l'une des revendications 7 ou 8, **caractérisé en ce que** la conduite d'aspiration d'air (18) comprend une première partie qui est reliée au filtre à air (26) ou au compartiment de compression d'air (27) et se termine dans le réservoir tampon (28), auquel réservoir est reliée une deuxième partie de la conduite d'aspiration d'air qui s'étend jusqu'au gobelet pour trayon (1).

11. Système selon la revendication 10, **caractérisé en ce que** la première partie de la conduite d'aspiration d'air s'étend à travers le réservoir tampon (28) et se termine dans celui-ci à proximité de l'embouchure de la deuxième partie de la conduite d'aspiration d'air.

12. Système selon l'une des revendications 10 ou 11, **caractérisé en ce que** le réservoir tampon (28) est muni d'un orifice d'évacuation d'air ou d'une soupape de surpression.

13. Système selon l'une des revendications précédentes, **caractérisé en ce que** le gobelet pour trayon (1) comprend deux parties (7, 9) qui sont reliées entre elles de manière séparable, la partie supérieure (7) entourant l'espace supérieur et la partie inférieure (9) entourant l'espace inférieur.

14. Système selon la revendication 13, **caractérisé en ce que** les deux parties (7, 9) du gobelet pour trayon (1) sont conçues pour être emmanchées l'une dans l'autre sur une distance relativement courte, tandis qu'un élément de verrouillage (14) est prévu pour fixer les deux parties entre elles.

15. Système selon la revendication 4, **caractérisé en ce que** les conduites (16, 18, 20) reliées au gobelet pour trayon (1) sont conçues sous la forme d'un système de conduite d'un seul tenant.

16. Système selon la revendication 15, **caractérisé en ce que** le système de conduite comprend la conduite de lait (16), la conduite de pulsation (20) et la conduite d'aspiration d'air (18).

17. Système selon la revendication 4, **caractérisé en ce qu'**un robot de traite est prévu pour adapter automatiquement les gobelets pour trayons (1) aux trayons d'un animal et les enlever, tandis que la conduite de lait (16) et la conduite de pulsation (20) sont toutes deux reliées à une conduite (21, 22) fixée au bras (2) du robot de traite.

18. Système selon la revendication 17, **caractérisé en ce que**, après avoir été adapté à un trayon, le gobelet pour trayon (1) peut être dégagé du bras de robot (2) mais reste relié à celui-ci par un élément flexible (5), à l'aide duquel ainsi que d'un cylindre de commande fixé au bras du robot ou agencé à l'intérieur de celui-ci le gobelet pour trayon peut être rétracté contre le bras du robot (2).
